# FASCICULE DE BREVET EUROPEEN

(11) **EP 3 368 354 B1**
(45) Date de publication et mention de la délivrance du brevet: **17.07.2019**
(21) Numéro de dépôt: 16790543.9
(22) Date de dépôt: 25.10.2016
(51) Int. Cl.: B60C 19/00, B60C 23/04, C09J 171/02, C09J 183/12

(54) **PNEUMATIQUE AVEC UN ORGANE FIXE A SA SURFACE ET PROCEDE DE FIXATION D'UN ORGANE A LA SURFACE D'UN PNEUMATIQUE**
REIFEN MIT EINEM AN DER OBERFLÄCHE BEFESTIGTEN ELEMENT UND VERFAHREN ZUR BEFESTIGUNG EINES ELEMENTS AN EINER REIFENFLÄCHE
TYRE WITH AN ELEMENT ATTACHED TO THE SURFACE THEREOF AND METHOD FOR ATTACHING AN ELEMENT TO THE SURFACE OF A TYRE

(30) Priorité: 28.10.2015 FR 1560319
(43) Date de publication de la demande: 05.09.2018
(73) Titulaire: Compagnie Générale des Etablissements Michelin, 63000 Clermont-Ferrand (FR)
(72) Inventeur: LAUBRY, Philippe, 63040 Clermont-Ferrand (FR); FAGOT-REVURAT, Lionel, 63040 Clermont-Ferrand (FR); ALDON, Isabelle, 63040 Clermont-Ferrand (FR)
(74) Mandataire: Desbordes, Guillaume
(86) Numéro de dépôt international: PCT/EP2016/075692
(87) Numéro de publication internationale: WO 2017/072119

(56) Documents cités:
- EP-A1- 2 889 349
- EP-A2- 0 906 839
- US-A1- 2002 091 222

## Description

### Domaine de l'invention

La présente invention est relative aux pneumatiques, et plus particulièrement aux pneumatiques comportant un organe fixé à leur surface.

### État de la technique

Plus précisément, l'invention concerne la fixation d'un organe notamment électronique, tel qu'un capteur de pression, sur un pneumatique. Le développement récent de ces organes est limité par la difficulté de fixer de façon rapide et durable un objet à la surface d'un pneumatique.

Le document EP 906 839 A2 présente un pneumatique comportant une surface intérieure et une surface extérieure, une zone d'accueil disposée sur l'une de ces surfaces intérieure et extérieure, une couche adhésive disposée sur cette zone d'accueil et un organe avec une couche de fixation caoutchouteuse fixée à la zone d'accueil par la couche adhésive, dans lequel la couche adhésive est une gomme de liaison caoutchouteuse vulcanisable à température ambiante pendant une durée de l'ordre de 48 à 72 heures.

Mais cette opération de fixation est longue et coûteuse.

### Description brève de l'invention

L'invention a pour objet un pneumatique similaire caractérisé en ce que la couche adhésive est à base d'un polyéther silanisé.

L'utilisation d'une telle couche adhésive a l'avantage de permettre une mise en place plus rapide de l'organe et de ne comporter aucun solvant ni dissolution tout en conservant une excellente résistance mécanique de la fixation.

De préférence, le polyéther silanisé est un polyéther téléchélique fonctionnel alkoxysilane.

À titre d'exemple l'alkoxysilane peut être le méthyldiméthoxysilane.

Le polyéther peut avantageusement être un polyoxypropylène.

L'organe peut être un dispositif électronique. Il peut aussi être un boitier apte à recevoir un dispositif électronique. L'organe peut aussi être un patch caoutchouteux.

L'épaisseur de la couche adhésive est préférentiellement comprise entre 1 et 1,5 mm.

L'invention a aussi pour objet un pneumatique comprenant deux bourrelets, deux flancs reliés aux bourrelets, un sommet relié aux extrémités des deux flancs avec une armature de sommet et une bande de roulement radialement extérieure, dans lequel, le pneumatique ayant un côté extérieur et un côté intérieur, l'organe est fixé à la surface radialement intérieure du sommet, axialement du côté extérieur du pneumatique.

Par côté extérieur du pneumatique, on entend le côté du pneumatique destiné à être disposé du côté extérieur du véhicule par rapport au plan médian du pneumatique.

Avantageusement, le pneumatique ayant une largeur axiale maximale LT, la distance axiale entre le centre de gravité de l'organe et le plan médian EP du pneumatique est au moins égale à 5% de la largeur axiale maximale LT du pneumatique.

Cette position permet de diminuer les conséquences de la présence d'un organe à la surface intérieure du pneumatique dans des conditions de très haute vitesse de roulage et avec un carrossage imposé.

De préférence, la distance axiale entre le centre de gravité de l'organe et le plan médian EP du pneumatique est au plus égale à 25% de la largeur axiale maximale LT du pneumatique.

Cela permet d'éviter la zone d'épaule du pneumatique, zone toujours très sollicitée.

Très avantageusement, la bande de roulement comportant un ensemble de rainures circonférentielles, le centre de gravité de l'organe est situé à l'aplomb d'une rainure circonférentielle de la bande de roulement du pneumatique.

Cette position facilite l'évacuation des calories liées à la présence de l'organe en roulage.

Par rainure, on entend toute zone en creux de la bande de roulement globalement circonférentielle et faisant globalement le tour du pneumatique, délimitée par des parois de matière se faisant face et distante l'une de l'autre d'une distance non nulle, d'une profondeur au moins égale à 2 mm lorsque le pneu est neuf. Ces parois ne peuvent pas venir en contact l'une contre l'autre dans les conditions usuelles de roulage. Une rainure circonférentielle a deux parois de direction globalement circonférentielle, l'une axialement intérieure et l'autre axialement extérieure.

Par un positionnement à l'aplomb de la rainure circonférentielle, on entend que le centre de gravité de l'organe est axialement extérieur à la paroi axialement intérieure de la rainure et axialement intérieur à la paroi axialement extérieure de la rainure avec une tolérance de positionnement axial de 5 mm.

Selon un autre mode de réalisation avantageux, le centre de gravité de l'organe est situé radialement à l'aplomb d'une nervure de la bande de roulement. En effet, sous fortes sollicitations, les premiers flambements du sommet ne sont pas localisés sous les nervures, mais sous les rainures. Ces flambements génèrent des déformations importantes pouvant détériorer la couche adhésive entre la gomme intérieure et l'organe. Dans ce cas, un positionnement de l'organe à l'aplomb d'une nervure améliore l'endurance de la couche adhésive et donc du pneumatique.

Par nervures, on entend un élément en relief formé sur une bande de roulement, cet élément s'étendant dans la direction circonférentielle et faisant globalement le tour du pneumatique, d'une hauteur d'au moins égale à 2 mm lorsque le pneu est neuf. Une nervure comprend deux parois axiales et une face de contact, cette dernière étant destinée à venir en contact avec le sol pendant le roulage. Une nervure circonférentielle a deux parois de direction globalement circonférentielle, l'une axialement intérieure et l'autre axialement extérieure. Une nervure peut ne pas être circonférentiellement continue mais être entaillée notamment dans le cas d'un pneumatique dédié à un usage hivernal.

Par un positionnement à l'aplomb de la nervure, on entend que le centre de gravité de l'organe est axialement extérieur à la paroi axialement intérieure de la nervure et axialement intérieur à la paroi axialement extérieure de la nervure avec une tolérance de positionnement axial de 5 mm.

Selon un autre objet, l'invention concerne un procédé de fixation d'un organe avec une couche de fixation caoutchouteuse sur une zone d'accueil de l'une des surfaces intérieure et extérieure d'un pneumatique, dans lequel :
- on applique sur la zone d'accueil et/ou sur la surface extérieure de la couche de fixation caoutchouteuse de l'organe une couche adhésive à base de polyéther silanisé ;
- on met en place l'organe contre la zone d'accueil ; et
- on laisse réticuler la couche adhésive.

Avantageusement, avant de mettre en place l'organe sur la zone d'accueil de la surface d'un pneumatique vulcanisé, on nettoie la zone d'accueil.

Ce nettoyage peut être réalisé par brossage ou par un jet d'eau haute pression ou par un faisceau laser.

Ce traitement permet d'enlever la plus grande partie des agents de démoulage utilisés et ainsi permet un collage durable de l'organe à la surface du pneumatique.

Selon un autre mode de réalisation, on met en place sur la zone d'accueil du pneumatique avant la vulcanisation du pneumatique un film de protection de la zone d'accueil et on retire ce film de protection de la zone d'accueil avant d'appliquer sur la zone d'accueil et/ou sur la surface radialement extérieure de l'organe une couche adhésive à base de polyéther silanisé.

De préférence, le film de protection est un film thermoplastique choisi de telle sorte que la force de pelage dudit film de la zone d'accueil est inférieure à 1 N/mm à 20°C et préférentiellement inférieure à 0,5 N/mm.

Préférentiellement, le film de protection est choisi dans le groupe des polyesters et des films comportant au moins un polymère fluoré.

À titre d'exemple, le polymère fluoré peut comporter un copolymère éthylène-propylène fluoré (FEP).

Avantageusement, la Tg (ou Tf, le cas échéant) du film de protection est supérieure à la température maximale de cuisson du mélange caoutchouteux de la zone d'accueil.

Selon un mode de réalisation préférentiel, la couche adhésive est appliquée par pulvérisation.

### Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### Adhésif à base de Polyéther Silanisé

Les demanderesses ont découvert que l'utilisation d'une nouvelle famille d'adhésif à base de polyéther silanisé permet d'améliorer le collage d'un organe sur une surface intérieure ou extérieure d'un pneumatique.

Les adhésifs utilisés sont à base de polyoxypropylènes fonctionnalisés méthoxysilane en bout de chaîne :

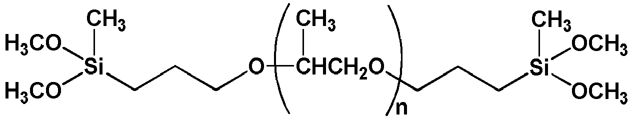

Un polyoxypropylène de haut poids est d'abord fonctionnalisé avec un groupement allyle à chacune des deux extrémités de la chaîne puis est hydrosilylé pour obtenir en final un polyéther téléchélique fonctionnel méthyldiméthoxysilane.

Ces polymères combinent assez bien les avantages des silicones (tenue au vieillissement) et des polyuréthannes (cohésion du matériau). Ils sont exempts d'isocyanate et de solvant.

Une formulation typique d'adhésif ou mastic à base de polyéther silanisé peut contenir en plus du polyéther fonctionnel: charge(s), plastifiant, pigment, promoteur d'adhésion, agent de déshydratation, catalyseur, agent thixotrope et optionnellement antioxydant et/ou stabilisant UV suivant l'usage.

Un exemple de formulation (Kaneka DKB-5 sealant) **⁽¹⁾** est présenté dans le tableau suivant :

| ***Type de composant*** | ***Nature du composant*** | ***pce*** | ***pcm*** |
|---|---|---|---|
| Polyéther silanisé (STPE) | S303H (Kaneka Corporation) | 100 | 33 |
| Charge | Carbonate de calcium (CaCO3) | 120 | 40 |
| Plastifiant | Di-iso-undécyl-phtalate (DIUP) | 50 | 16.6 |
| Pigment | Oxyde de titane blanc (TiO2) | 20 | 6.6 |
| Agent thixotrope | Cire polyamide ou Silice pyrogénée | 5 | 1.7 |
| Agent de déshydratation | Vinyltriméthoxysilane | 2 | 0.7 |
| Promoteur d'adhésion | N-2-aminoéthyl-3-aminopropyltriméthoxysilane | 3 | 1 |
| Catalyseur durcisseur | Bis-acétylacétonate de dibutyl-étain | 1.5 | 0.5 |
| ***Total*** | | ***301.5*** | ***100*** |

| | | | |
|---|---|---|---|
| **⁽¹⁾** CABOT - CAB-O-SIL TS-720 in MS-Polymer Sealants (2010) pce : partie en poids pour 100 parties d'élastomère, ici le polyéther silanisé ; pcm : pourcentage en poids relativement à 100 g d'adhésif. | | | |

Après application de l'adhésif à base de polyéther silanisé (Silyl-Terminated PolyEther ou STPE), celui-ci polymérise avec l'humidité de l'air **⁽²⁾.**

Cette polymérisation s'effectue en deux étapes :
Étape 1 : Conversion par hydrolyse du méthoxysilane en silanol : 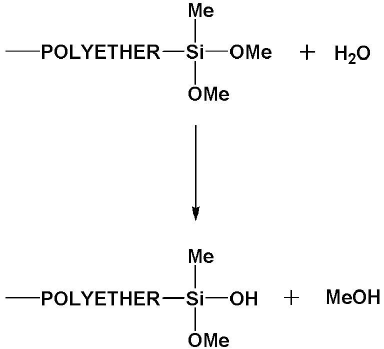
Étape 2 : Condensation du silanol avec un méthoxysilane pour former un pont siloxane : 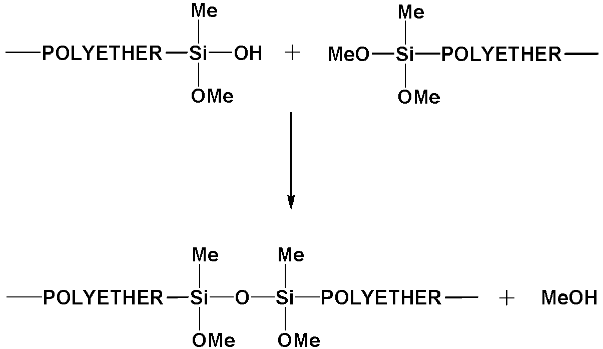 **⁽²⁾** CRAY VALLEY - One-component Moisture Curing Methoxysilane Sealants (2001)

Des adhésifs à base de polyéther silanisé sont disponibles commercialement notamment auprès de la société Bostik : BOSTIK-Simson-ISR-7003, c'est un adhésif mono-composant.

L'utilisation d'un tel adhésif a pour avantages de n'utiliser aucun solvant ni aucune dissolution et d'avoir une cinétique de réticulation beaucoup plus rapide qu'une couche de gomme de liaison usuelle vulcanisant à froid, telle que Gray-Gum fournie par Tech International, tout en ayant une excellente résistance mécanique. Cette gomme de liaison nécessite l'usage d'une dissolution (« vulcanization chemical fluid ») qui comporte un ultra accélérateur de vulcanisation et qui est à appliquer après la préparation des surfaces à coller.

Trois paramètres principaux interviennent dans la cinétique de réticulation de l'adhésif cité de Bostik : la température, l'hygrométrie et l'épaisseur.

En considérant des conditions normales d'hygrométrie (50 % d'humidité relative) et une température de 23 degrés Celsius, une couche de gomme de liaison d'épaisseur 0,3-0,4 mm va réticuler en environ une quarantaine d'heures alors qu'une couche adhésive d'épaisseur 1 mm de l'adhésif cité de Bostik va réticuler en moins de six heures. A une température de 35 degrés Celsius et 80 % d'humidité relative, le temps de réticulation est réduit d'un facteur deux.

C'est une diminution très importante pour la facilité d'utilisation de la couche adhésive pour la fixation d'un organe après la vulcanisation d'un pneumatique.

L'adhésif cité de Bostik présente aussi une température de transition vitreuse Tg de -67°C après réticulation. Cela lui permet de n'avoir aucun problème de cassures à froid et de rester très efficace dans toute la gamme de température utilisée en roulage.

### Mélange caoutchouteux

La partie du pneumatique sur laquelle est fixée l'organe selon l'invention ainsi que la couche de fixation caoutchouteuse de l'organe sont des compositions de caoutchouc à base d'au moins un élastomère diénique essentiellement insaturé, d'au moins un élastomère diénique essentiellement saturé ou encore d'un mélange de ces deux types d'élastomères. Les compositions de caoutchouc peuvent aussi être à base ou comporter des caoutchoucs tels que des EPM ou caoutchoucs éthylène-propylène-monomère. Les compositions de caoutchouc contiennent aussi usuellement des charges telles du noir de carbone ou de la silice ainsi que des additifs classiques et notamment les agents de protection contre l'ozone, l'oxydation, etc.

Par élastomère « diénique », on entend de manière connue un élastomère issu au moins en partie (i.e. un homopolymère ou un copolymère) de monomères diènes (monomères porteurs de deux doubles liaisons carbone-carbone, conjuguées ou non). Ces élastomères diéniques peuvent être classés dans deux catégories : « essentiellement insaturés » ou « essentiellement saturés ».

De manière générale, on entend ici par élastomère diénique « essentiellement insaturé » un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques « essentiellement saturés » (taux de motifs d'origine diénique faible ou très faible, toujours inférieur à 15%).

Selon un mode de réalisation de l'invention, la partie du pneumatique sur laquelle est fixée l'organe selon l'invention est le flanc du pneumatique. La composition de cette partie du pneumatique peut alors contenir au moins un élastomère diénique essentiellement saturé, en particulier au moins un copolymère EPDM, que ce copolymère soit par exemple utilisé ou non en mélange avec un ou plusieurs des élastomères diéniques essentiellement insaturés.

Selon un autre mode de réalisation de l'invention, la partie du pneumatique sur laquelle est fixé l'organe selon l'invention est une gomme intérieure de pneumatique ou toute autre couche ou objet de la portion interne du pneumatique. Les figures en annexe illustrent ce mode de réalisation et plus particulièrement une fixation de l'organe sous la bande de roulement du pneumatique. La composition de cette partie du pneumatique peut alors contenir au moins un élastomère diénique essentiellement saturé de type copolymère d'isobutène et d'isoprène (caoutchouc butyle), ainsi que les versions halogénées de ces copolymères.

### Description des Figures

Des éléments complémentaires de l'invention sont maintenant décrits avec l'aide du dessin annexé, présenté à titre non limitatif, dans lequel :
- la figure 1 représente de manière très schématique, une coupe radiale d'un pneumatique conforme à un mode de réalisation de l'invention ;
- la figure 2 présente en coupe radiale partielle une ébauche de pneumatique conforme à un mode de réalisation de l'invention ;
- la figure 3 illustre un organe avec une couche de fixation ;
- la figure 4 montre l'organe fixé à la surface du pneumatique; et
- la figure 5 montre l'organe fixé à la surface du pneumatique à une autre position préférentielle.

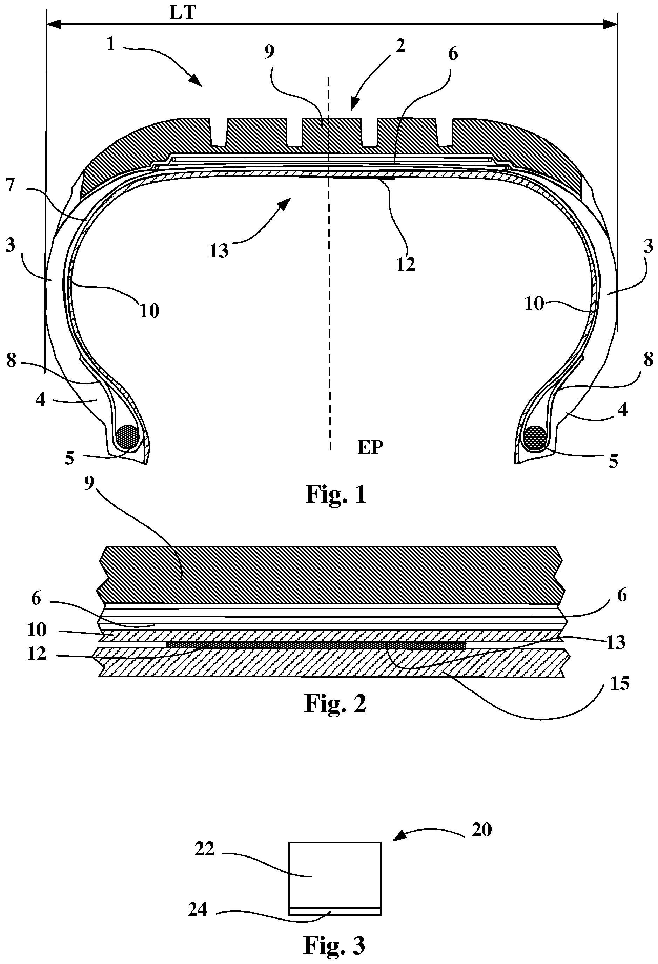

La figure 1 représente de manière schématique une coupe radiale d'un bandage pneumatique ou pneumatique incorporant à une zone d'accueil 13 donnée un film de protection 12 selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche (ou « gomme intérieure » ou « inner liner ») 10 s'étend d'un bourrelet à l'autre radialement intérieurement relativement à l'armature de carcasse 7. La figure 1 indique aussi le plan médian EP du pneumatique. Le plan médian est un plan perpendiculaire à l'axe de rotation du pneumatique, situé à mi-distance des deux bourrelets et passant par le milieu de l'armature de sommet. Cette figure indique aussi la largeur axiale maximale du pneumatique LT. Celle-ci est mesurée au niveau des flancs, le pneumatique étant monté sur sa jante et faiblement gonflé, c'est-à-dire gonflé à une pression égale à 10% de la pression nominale telle que recommandée, par exemple par la Tire and Rim Association ou TRA.

Le pneumatique 1 est tel que sa paroi interne comporte une zone d'accueil 13 donnée recouverte radialement intérieurement par un film de protection 12.

La surface de la zone d'accueil 13 doit être suffisante pour obtenir une fixation robuste de l'organe, l'homme du métier saura ajuster la dimension de la couche de protection 12 en fonction de la taille et de la masse de l'organe à fixer.

Le film de protection séparable 12 est un film thermoplastique comportant à titre d'exemple un polymère fluoré. Le film thermoplastique est extensible avec une faible rigidité et a un comportement plastique. Ce film doit avoir une Tg (ou Tf, le cas échéant) supérieure à la température de vulcanisation du bandage pneumatique. Un exemple de film adapté est le film A5000 de Aerovac Systèmes France. Ce film comporte un copolymère éthylène-propylène fluoré ou FEP. Ce film a une température maximale d'utilisation de l'ordre de 204 °C et a un allongement rupture supérieur à 300%. Son épaisseur est de 25 µm. Ces caractéristiques lui permettent, dans un exemple de réalisation de l'invention, d'être mis en place directement soit sur le tambour de confection du bandage pneumatique.

Comme l'indique la figure 2, le film de protection séparable 12 permet de préserver la zone d'accueil 13 de tout contact avec le tambour de fabrication du pneumatique puis avec la membrane de cuisson du moule de vulcanisation. La nature particulière de ce film de protection lui permet d'être retiré de la surface intérieure du pneumatique après la vulcanisation. Le retrait de ce film de protection redonne à la surface de la zone d'accueil du pneumatique toutes ses propriétés. Le film de protection 12 peut être enlevé sans se déchirer.

Le bandage pneumatique ou pneumatique de la figure 1 peut être fabriqué, comme l'indique la figure 2, en intégrant le film de protection dans une ébauche non vulcanisée du pneumatique 1 en utilisant un tambour de fabrication et les autres techniques usuelles dans la fabrication des bandages pneumatiques. Plus précisément, le film de protection séparable 12 disposé radialement le plus à l'intérieur est appliqué en premier sur le tambour de fabrication 15. On applique ensuite, successivement, tous les autres composants usuels du bandage pneumatique.

Après la conformation, les nappes sommet et la bande de roulement sont mises en place sur l'ébauche du pneumatique. L'ébauche ainsi achevée est placée dans un moule de cuisson et est vulcanisée. Pendant la vulcanisation, le film de protection protège la membrane de cuisson du moule de tout contact avec la zone d'accueil 13.

À la sortie du moule de cuisson, le film de protection 12 est toujours attaché à la zone d'accueil 13.

Le film de protection 12 peut être aisément retiré à la sortie du moule de vulcanisation du pneumatique. Il est aussi possible, et préférable, de laisser en place ce film de protection jusqu'au moment de la fixation de l'organe.

Le film de protection peut aussi être appliqué sur la zone d'accueil 13 choisie à la surface du pneumatique après la conformation de l'ébauche de pneumatique et avant l'introduction de celle-ci dans le moule de vulcanisation.

La figure 3 présente schématiquement un organe 20 comportant un boîtier 22 et une couche de fixation 24. Le matériau de la couche de fixation 24 est un mélange caoutchouteux. L'homme de l'art saura adapter l'épaisseur de la couche de fixation en fonction de celle de la couche adhésive et de la taille et de la masse de l'organe.

La figure 1 présente ainsi un pneumatique 1 prêt à recevoir un organe.

Il est aussi possible de fixer un organe sur une zone d'accueil 13 d'un pneumatique vulcanisé usuel, c'est-à-dire sans qu'il comporte un film de protection protégeant la zone d'accueil.

Dans ce cas, il est préférable de nettoyer cette zone d'accueil avant de fixer l'organe.

Ce nettoyage peut être réalisé, par exemple, au moyen d'un jet d'eau haute pression. Ce nettoyage permet de retirer la plus grande partie des agents de démoulage qui ont été mis sur cette surface avant la vulcanisation du pneumatique pour faciliter le décollage de la membrane de cuisson du moule de vulcanisation du pneumatique.

Après le nettoyage, la surface de la zone d'accueil de la gomme intérieure est séchée.

Il est aussi possible de réaliser ce nettoyage par brossage ou avec un faisceau laser.

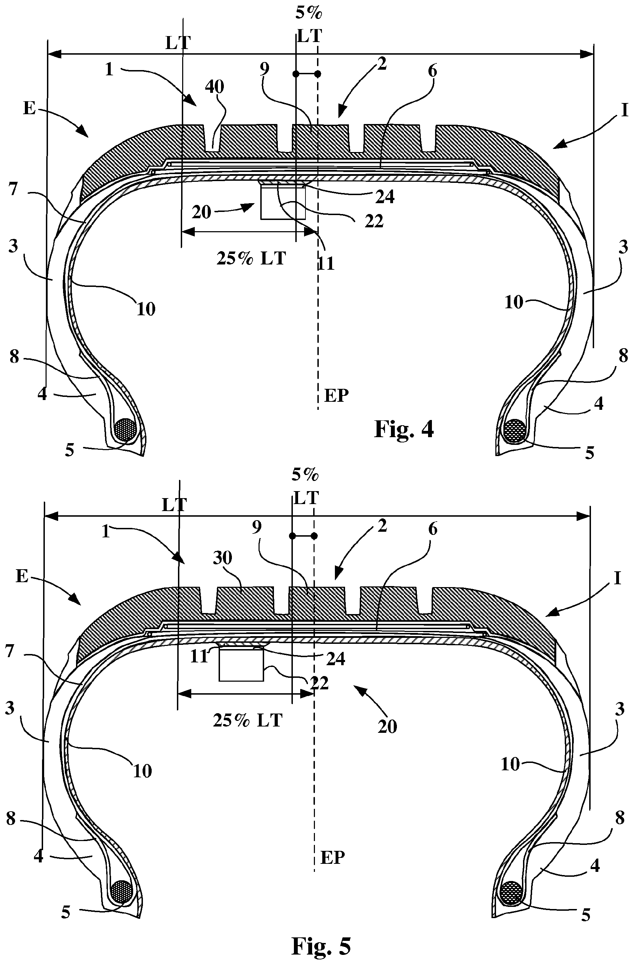

La figure 4 présente l'ensemble du pneumatique de la figure 1 et de l'organe 20 fixé sur sa surface intérieure sur la gomme intérieure. Ce pneumatique est caractérisé en ce que la couche adhésive 11 est à base d'un polyéther silanisé. La couche d'adhésif assure le maintien en place de l'organe 20.

La fixation de l'organe 20 à la surface du pneumatique est réalisée aisément et rapidement. Après avoir retiré le film de protection 12 de la zone d'accueil 13 du pneumatique 1 si nécessaire :
- on applique sur la surface de la zone d'accueil une couche d'adhésif à base de polyéther silanisé ; une application de l'adhésif par pulvérisation est également possible : dans ce cas elle peut se faire à température plus élevée pour favoriser la technique de pulvérisation (baisse de la viscosité de l'adhésif) ;
- on met en place la couche de fixation de l'organe contre la surface de la couche adhésive 11 avec de préférence une pression de contact adaptée ;
- puis, on laisse réticuler la couche d'adhésif à température ambiante comme il a été décrit précédemment.

La réticulation de la couche d'adhésif crée deux liaisons de grande qualité : entre l'adhésif et la gomme intérieure d'une part, et entre l'adhésif et la couche de fixation caoutchouteuse de l'organe d'autre part. La qualité de ces liaisons est liée à un réseau interpénétré provenant de la polycondensation des oligomères fonctionnels alcoxysilanes.

En effet, les chaines macromoléculaires des mélanges caoutchouteux et de l'adhésif polyéther silanisé sont partiellement compatibles ce qui permet à une diffusion intermoléculaire entre les chaines macromoléculaires d'intervenir lors de la mise en contact de la couche adhésive contre la gomme intérieure et la couche de fixation de l'organe.

De plus, cette diffusion est favorisée d'une part par la bonne mobilité du polyéther silanisé (pas encore réticulé) et d'autre part par la présence de petites molécules comme le promoteur d'adhésion, l'agent de déshydratation et même le plastifiant (les trois agissant comme pseudo-solvant). Bien qu'elle ne soit que très superficielle, cette diffusion intermoléculaire est capable de générer en final un réseau interpénétré après réticulation du polyéther silanisé. Cet enchevêtrement des molécules de chacun des matériaux, avec disparition de l'interface et création d'une interphase sur une faible épaisseur, doit être responsable de la bonne adhésion observée et mesurée.

Dans l'exemple présenté, l'organe est fixé à la surface interne du pneumatique, il est aussi possible de le placer sur une surface externe du pneumatique par exemple sur le flanc du pneumatique.

Les surfaces de la zone d'accueil 13 et donc de la couche adhésive 11 doivent être suffisantes pour obtenir une fixation robuste de l'organe, l'homme du métier saura ajuster la dimension de la couche adhésive 11 en fonction de la taille et de la masse de l'organe à fixer.

### Tests

L'intérêt de l'adhésif selon l'un des objets de l'invention est montré par les résultats d'un test de résistance à très haute vitesse.

Les pneumatiques concernés sont de dimension 305/30ZR20 103Y, avec un côté intérieur I et un côté extérieur E, de largeur axiale maximale 313 mm et sont testés avec un angle de carrossage de 2,5° afin de prendre en compte les impératifs techniques d'un véhicule auquel ils sont spécifiquement dédiés. Le test consiste en un roulage sur un volant métallique de 8,5 m de circonférence, à une pression de 3,2 bars et une charge de 587 daN régulées. Le pneumatique roule en paliers de vitesses croissantes, d'une durée de 20 minutes chacun, l'incrément en vitesse est de 10 km/h. Les pneumatiques sont classés en fonction de la vitesse maximale atteinte et de la durée de roulage pendant le dernier palier de vitesse atteint.

L'organe est dans ce test un capteur de pression et température placé dans un boitier en mélange caoutchouteux à base de polybutadiène 1-4 cis et de butyle halogéné, tel que décrit dans le document US 8,763,658 B2.

Une comparaison est faite entre un pneumatique non équipé d'organe, un pneumatique avec un organe fixé avec une couche adhésive de 0,3-0,4 mm d'épaisseur Gray-Gum fournie par Tech International et un pneumatique avec un organe fixé avec une couche adhésive de 1 mm d'épaisseur environ, de Bostik-Simson-ISR-7003.

Le pneumatique sans l'organe atteint le palier 370 km/h et roule à cette vitesse pendant 11 minutes. Le pneumatique selon l'état de l'art, à savoir équipé de l'organe électronique, un capteur de pression d'une masse de 7 g, positionné selon l'état de l'art, et donc installé dans le pneumatique de telle sorte que son centre de gravité soit dans le plan équatorial à la tolérance de positionnement près de 1% de la largeur axiale maximale, ce pneumatique atteint le palier de vitesse 340 km/h et a une défaillance au bout d'une minute de roulage à cette condition. Ce résultat comparé à celui du pneumatique non muni de l'organe électronique, démontre la baisse de performance en endurance à très haute vitesse induite par la présence de l'organe électronique. Cette défaillance est liée à l'augmentation de la température dans le sommet de 15°C environ vue par simulation numérique à l'aplomb du capteur, ceci à la même vitesse entre le pneumatique non muni d'un organe électronique et le pneumatique muni due l'organe électronique suivant l'état de l'art.

Les inventeurs ont testé deux réalisations de l'invention. La première réalisation illustrée à la figure 5 consiste à installer l'organe électronique 20 à une distance du plan équatorial de 16% de la largeur axiale maximale LT, à l'aplomb d'une nervure 30 de la bande de roulement 9. Dans ce cas, le pneumatique selon l'invention atteint le palier de vitesse de 360 km/h et roule pendant 15 minutes sur ce palier. Ceci comparé au résultat du pneumatique muni de l'organe électronique positionné dans le plan équatorial, à savoir palier maximum atteint 340 Km/h, démontre l'amélioration de l'endurance à haute vitesse du pneumatique muni du organe électronique tel que décrit par l'invention.

La seconde réalisation illustrée à la figure 4 consiste à installer l'organe électronique 20 à une distance du plan équatorial de 7% de la largeur axiale maximale, à l'aplomb d'une rainure 40 de la bande de roulement 9. Dans ce cas, le pneumatique selon l'invention atteint le palier de vitesse de 370 km/h et roule pendant 15 minutes sur ce palier. La température sommet maximale baisse de près de 15°C. Ce résultat comparé au résultat du pneumatique muni de l'organe électronique positionné dans le plan équatorial, à savoir palier maximum atteint 340 Km/h, montre l'amélioration de l'endurance à haute vitesse du pneumatique muni de l'organe électronique tel que décrit par l'invention selon ce deuxième mode de réalisation.

Aucun écart de performance n'a été observé entre les deux couches adhésives testées. En revanche, un test complémentaire utilisant une colle à base de cyanoacrylate a montré que celle-ci est insatisfaisante.

Ces résultats montrent que l'utilisation d'une couche adhésive à base de polyéther silanisé est une alternative intéressante à l'utilisation d'une gomme de liaison classique telle la Gray-Gum de Tech International.

## Revendications

1. Pneumatique comportant une surface intérieure et une surface extérieure, une zone d'accueil disposée sur l'une desdites surfaces intérieure et extérieure, une couche adhésive disposée sur ladite zone d'accueil et un organe comportant une couche de fixation caoutchouteuse fixée à ladite zone d'accueil par ladite couche adhésive, **caractérisé en ce que** ladite couche adhésive est à base d'un polyéther silanisé.

2. Pneumatique selon la revendication 1, dans lequel le polyéther silanisé est un polyéther téléchélique fonctionnel alkoxysilane.

3. Pneumatique selon la revendication 2, dans lequel l'alkoxysilane est le méthyldiméthoxysilane.

4. Pneumatique selon l'une quelconque des revendications précédentes, dans lequel le polyéther est un polyoxypropylène.

5. Pneumatique selon l'une quelconque des revendications précédentes, dans lequel l'organe est un boitier apte à recevoir un dispositif électronique.

6. Pneumatique selon l'une quelconque des revendications 1 à 4, dans lequel l'organe est un dispositif électronique.

7. Pneumatique selon l'une quelconque des revendications 1 à 4, dans lequel l'organe est un patch caoutchouteux.

8. Pneumatique selon l'une quelconque des revendications précédentes, dans lequel l'épaisseur de ladite couche adhésive est comprise entre 1 et 1,5 mm.

9. Pneumatique selon l'une quelconque des revendications précédentes, comprenant deux bourrelets, deux flancs reliés aux bourrelets, un sommet relié aux extrémités des deux flancs avec une armature de sommet et une bande de roulement radialement extérieure, dans lequel, le pneumatique ayant un côté extérieur et un côté intérieur, ledit organe est fixé à la surface radialement intérieure du sommet, axialement du côté extérieur du pneumatique.

10. Procédé de fixation d'un organe avec une couche de fixation caoutchouteuse sur une zone d'accueil de l'une des surfaces extérieure et intérieure d'un pneumatique, dans lequel :
- on applique sur ladite zone d'accueil et/ou sur la surface extérieure de la couche de fixation caoutchouteuse de l'organe une couche adhésive à base de polyéther silanisé ;
- on met en place l'organe contre la zone d'accueil ; et
- on laisse réticuler la couche adhésive.

11. Procédé selon la revendication 10, dans lequel, avant de mettre en place l'organe sur la zone d'accueil de la surface du pneumatique, on nettoie ladite zone d'accueil.

12. Procédé selon la revendication 10, dans lequel, on met en place sur la zone d'accueil dudit pneumatique avant la vulcanisation dudit pneumatique un film de protection de ladite zone d'accueil et on retire ledit film de protection de ladite zone d'accueil avant d'appliquer sur ladite zone d'accueil et/ou sur la surface radialement extérieure de l'organe une couche adhésive à base de polyéther silanisé.

13. Procédé selon l'une des revendications 10 à 12, dans lequel le polyéther silanisé est un polyéther téléchélique fonctionnel alkoxysilane.

14. Procédé selon la revendication 13, dans lequel l'alkoxysilane est un méthyldiméthoxysilane.

15. Procédé selon l'une quelconque des revendications 10 à 14, dans lequel le polyéther est un polyoxypropylène.

## Patentansprüche

1. Reifen, der eine Innenfläche und eine Außenfläche aufweist, wobei auf einer der Flächen, der Innen- oder Außenfläche, ein Aufnahmebereich angeordnet ist, eine Klebstoffschicht auf dem Aufnahmebereich angeordnet ist und ein Element, das eine Gummibefestigungsschicht aufweist, an dem Aufnahmebereich über die Klebstoffschicht befestigt ist, **dadurch gekennzeichnet, dass** die Klebstoffschicht auf einem silanisierten Polyether basiert.

2. Reifen nach Anspruch 1, wobei der silanisierte Polyether ein alkoxysilan-funktionalisierter telecheler Polyether ist.

3. Reifen nach Anspruch 2, wobei das Alkoxysilan Methyldimethoxysilan ist.

4. Reifen nach einem der vorhergehenden Ansprüche, wobei der Polyether ein Polyoxypropylen ist.

5. Reifen nach einem der vorhergehenden Ansprüche, wobei das Element ein Gehäuse ist, das in der Lage ist, eine elektronische Einrichtung aufzunehmen.

6. Reifen nach einem der Ansprüche 1 bis 4, wobei das Element eine elektronische Einrichtung ist.

7. Reifen nach einem der Ansprüche 1 bis 4, wobei das Element ein Gummistück ist.

8. Reifen nach einem der vorhergehenden Ansprüche, wobei die Dicke der Klebstoffschicht zwischen 1 und 1,5 mm liegt.

9. Reifen nach einem der vorhergehenden Ansprüche, der zwei Wülste, zwei mit den Wülsten verbundene Seitenwände, ein mit den Enden der beiden Seitenwände verbundenes Oberteil mit einer Oberteilverstärkung und eine radial außen befindliche Lauffläche umfasst, wobei, da der Reifen eine Außenseite und eine Innenseite aufweist, das Element an der radial innen befindlichen Fläche des Oberteils, axial auf der Außenseite des Reifens, befestigt ist.

10. Verfahren zur Befestigung eines Elements mit einer Gummibefestigungsschicht an einem Aufnahmebereich der Außenfläche oder Innenfläche eines Reifens, wobei:
- auf dem Aufnahmebereich und/oder auf der Außenfläche der Gummibefestigungsschicht des Elements eine Klebstoffschicht auf Basis von silanisiertem Polyether aufgebracht wird;
- das Element an dem Aufnahmebereich platziert wird; und
- die Klebstoffschicht vernetzen gelassen wird.

11. Verfahren nach Anspruch 10, wobei vor dem Platzieren des Elements auf den Aufnahmebereich der Fläche des Reifens der Aufnahmebereich gereinigt wird.

12. Verfahren nach Anspruch 10, wobei vor der Vulkanisation des Reifens ein Schutzfilm für den Aufnahmebereich auf den Aufnahmebereich des Reifens platziert wird und der Schutzfilm von dem Aufnahmebereich abgezogen wird, bevor auf den Aufnahmebereich und/oder auf die radial außen befindliche Fläche des Elements eine Klebstoffschicht auf Basis von silanisiertem Polyether aufgebracht wird.

13. Verfahren nach einem der Ansprüche 10 bis 12, wobei der silanisierte Polyether ein alkoxysilan-funktionalisierter telecheler Polyether ist.

14. Verfahren nach Anspruch 13, wobei das Alkoxysilan ein Methyldimethoxysilan ist.

15. Verfahren nach einem der Ansprüche 10 bis 14, wobei der Polyether ein Polyoxypropylen ist.

## Claims

1. Tyre comprising an interior surface and an exterior surface, an accommodating region arranged on one of said interior and exterior surfaces, an adhesive layer arranged on said accommodating region and a member comprising a rubber attachment layer attached to said accommodating region by said adhesive layer, **characterized in that** said adhesive layer is based on a silanized polyether.

2. Tyre according to Claim 1, in which the silanized polyether is an alkoxysilane-functional telechelic polyether.

3. Tyre according to Claim 2, in which the alkoxysilane is methyldimethoxysilane.

4. Tyre according to either one of the preceding claims, in which the polyether is a polyoxypropylene.

5. Tyre according to any one of the preceding claims, in which said member is a casing able to receive an electronic device.

6. Tyre according to any one of Claims 1 to 4, in which the member is an electronic device.

7. Tyre according to any one of Claims 1 to 4, in which the member is a rubber patch.

8. Tyre according to any one of the preceding claims, in which the thickness of said adhesive layer is between 1 and 1.5 mm.

9. Tyre according to any one of the preceding claims, comprising two beads, two sidewalls connected to the beads, a crown connected to the ends of the two sidewalls with a crown reinforcement and a radially exterior tread, in which, the tyre having an exterior side and an interior side, said member is attached to the radially interior surface of the crown, axially on the exterior side of the tyre.

10. Process for attaching a member with a rubber attachment layer to an accommodating region of one of the exterior and interior surfaces of a tyre, in which:
- an adhesive layer based on silanized polyether is applied to said accommodating region and/or to the exterior surface of the rubber attachment layer of the member;
- the member is placed against the accommodating region; and
- the adhesive layer is allowed to crosslink.

11. Process according to Claim 10, in which, before placing the member on the accommodating region of the surface of the tyre, said accommodating region is cleaned.

12. Process according to Claim 10, in which a film for protecting said accommodating region is placed on the accommodating region of said tyre before said tyre is vulcanized, and said film for protecting said accommodating region is removed before applying an adhesive layer based on silanized polyether to said accommodating region and/or to the radially exterior surface of the member.

13. Process according to one of Claims 10 to 12, in which the silanized polyether is an alkoxysilane-functional telechelic polyether.

14. Process according to Claim 13, in which the alkoxysilane is a methyldimethoxysilane.

15. Process according to any one of Claims 10 to 14, in which the polyether is a polyoxypropylene.
